# EUROPEAN PATENT SPECIFICATION

(11) **EP 0 403 625 B1**
(45) Date of publication and mention of the grant of the patent: **29.11.1995**
(21) Application number: 90900685.0
(22) Date of filing: 21.12.1989
(51) Int. Cl.: G06F 7/00, G06K 15/12

(54) **RESEQUENCING LINE STORE DEVICE**
ZEILENSPEICHEREINRICHTUNG ZUR RESEQUENZIERUNG
DISPOSITIF DE STOCKAGE DE LIGNES POUR REMISE EN SEQUENCE

(30) Priority: 27.12.1988 US 290666
(43) Date of publication of application: 27.12.1990
(73) Proprietor: EASTMAN KODAK COMPANY, Rochester, New York 14650-2201 (US)
(72) Inventor: SMALL, Jeffrey, Alan, Rochester, NY 14624 (US); SHOPE, Gary, W., Rochester, NY 14617 (US)
(74) Representative: Schmidt, Peter, Dipl.-Ing.
(86) International application number: US8905690
(87) International publication number: WO9007753

(56) References cited:
- EP-A- 0 135 880
- US-A- 3 778 773
- US-A- 4 525 729
- US-A- 4 609 927
- US-A- 4 734 714

## Description

### Technical Field

The present invention relates to non-impact printing apparatus for recording on a moving recording medium, and particularly to a resequencing line store device for resequencing sequential line data to be recorded on a recording medium.

### Background Art

In the prior art, printing apparatus is described which comprises a multiplicity of individually addressable and energizable point-like radiation sources, such as light-emitting diodes (LED's), arranged in row(s) for exposing points upon a photoreceptor during movement thereof relative to and in a direction normal to the row(s). For example, driver circuits may be provided for simultaneously energizing the radiation sources responsive to respective data bit input signals applied to the driver circuits during an information line period. The print or recording head includes a support upon which are mounted chips placed end to end and upon each of which are located a group of LED's. The driver circuits are incorporated in other chips located to each side of the linear array of LED's. The driver chips are provided to both sides of the LED array and the drive circuitry is alternately interleaved. The linear array with respective driver circuits thereby collectively forms a LED bar. The print or recording head is typically a multi-channel device; e.g., the data is supplied to the several driver circuits in the print head on multiple data lines or channels. The number of such channels is typically two or four, and sometimes higher numbers depending upon the print head configuration.

The driver circuits in such apparatus each include a shift register for serially receiving data-bit signals and for driving respective LED's in accordance with the data or image signals. The shift registers on adjacent chips are coupled together to function as a single "shift register assemblage" so that the data bits (image signals) flow serially into the shift registers in the shift register assemblage under clock control. Because of the extremely small separation distance between the individual LED's, the conductive lines to each LED are arranged at the periphery of the LED group in an odd-even pattern. At one side of a LED bar is arranged the conductive lines or foils which lead to the shift registers for the even-numbered LED's, and at the opposing side are the lines similarly arranged to the registers for the odd-numbered LED's. Moreover, the total number of registers in each side is divided into a high set and a low set of registers and thus two correspondingly-named data lines or channels supply each side. Hence, data must be provided to the high and low shift registers located to one side of the LED's, as appropriate for the odd-numbered LED's, and similarly to the shift registers on the other side. This arrangement speeds the flow of data to the shift registers in that the odd and even data bits go simultaneously to respective odd and even shift register assemblages. While data is being shifted down one set of odd shift registers, additional odd bits of data simultaneously are being shifted down other odd shift register assemblages.

The data management for this type of apparatus may be complex or simple depending upon the arrangement of the data. Generally in applications having data outputted by a raster image processor (RIP) intended to be written by a laser beam, data management for directing such data to a multiple array print head presents some difficulties. This is due to the sequential order in which the data is provided, particularly in applications having a printer control system operated from a raster image processor (RIP). In a laser exposure device that employs, for example, a rotating polygon to expose a line in the mainscanning direction, the data is sequenced first pixel first, and so on until the last pixel on the line. The data stream may be reformatted into multi-bit parallel words for retention in various frame or page data buffers.

From the US-A-3 778 773 an apparatus for the manipulation of data is known which consists of a matrix of shift registers under the control of a plurality of gates. Various functions can be performed like serial-to-parallel and parallel-to-serial conversion, serial-to-serial buffering and interleaving or separating streams of data. Although this apparatus may be useful for reformatting data into different formats, it is not suitable for resequencing a serial stream of data into a predetermined number of simultaneous serial data streams of slower clock rate as required for a linear printhead of an imaging apparatus.

Further, the EP-A-0 135 880 describes a control circuit for an imaging apparatus comprising a linear printhead for bidirectional scanning of an image, whereby the imaging elements of the printhead are arranged in a staggered array with the odd and even numbered imaging elements being displaced from each other to increase the resolution of the printhead. This displacement of the imaging elements thereby requires that a line of data bits be divided into odd and even groups to allow one to be delayed relative to the other in the direction of scanning. As the image is scanned bidirectional, forward and reverse, the delay between odd and even imaging elements has also to be reversed in the reverse scanning direction. This is done by resequencing the readout of odd and even image data from an image memory in the desired order, depending on the direction of scanning. Such resequencing by appropriate addressing of an image memory is however too complex and not suitable for partitioning of a serial stream of image data according to the partitioning of a large number of imaging elements in a linear array since the image data of each partition have to be read out serially and simultaneously.

### Disclosure of the Invention

The apparatus of the present invention is preferred for use in an electrostatographic reproduction apparatus wherein rasterized image signals are fed to a resequencing circuit for resequencing the image data on a line-by-line basis. The resequenced data line is subsequently transferred to a recording means, such as a print head, wherein a plurality of recording elements are arranged in a line configuration. Intermediate register means outputs the image signals in parallel to each of several shift register assemblages. Driving means actuate the elements for recording on a line-by-line basis.

In accordance with the invention, a data resequencing apparatus is described, for use in a printing device comprising a printhead having a plural number M x N of linearly arranged recording elements ordered in predetermined odd and even groups and subgroups thereof, wherein M and N are each numbers greater than one, said resequencing apparatus resequencing at least one line of data bits having a first sequential order into a distribution mode according to said ordering of recording elements, said apparatus comprising:
at least one resequencing line store device having a plurality of interconnected memory cells operable for storage and selectable shifting of said data bits, each of said cells being adapted for storage of one of said bits, said plurality of cells being arranged in a plurality of cell groups and a plurality of cell subgroups corresponding respectively to said ordering of recording elements and wherein each cell group comprises a plurality of memory cells interconnected to form a matrix of M x N x (1/2) memory cells operable for storage and selectable shifting of said data bits in response to control signals, said matrix of cells being arranged so as to form M/2 rows of parallel shift registers of N column stages each;
control means for providing control signals to implement parallel selectable shifting of a column of M/2 bit words of data along the rows of said parallel shift registers of each cell group to fill said matrix of memory cells with M x N (1/2) bits of data, said control means providing additional control signals for serially shifting data bits from the Nth column stage of said matrix and from an intermediate column stage corresponding to said ordering of recording elements on said printhead to thereby resequence said data onto at least four respective data lines that correspond to said subgroups and which transmit data to said printhead.

### Brief Description of the Drawings

Fig. 1 is a schematic of a printing apparatus of the prior art.

Fig. 2 is a block diagram of circuitry used in forming a print head of the apparatus of Fig. 1 in accordance with the prior art.

Fig. 3 is a block diagram of a prior art driver circuit for use in the print head of Fig. 2.

Fig. 4 is a block diagram of a printer control system which includes an improved data resequencing circuit for formatting data to the driver circuit of the print head of Fig. 2 in accordance with the invention.

Figs. 5A and 5B are flow diagrams of the resequencing line store devices of the resequencing circuit of Fig. 4.

### Best Mode for Carrying Out the Invention

The apparatus of the preferred embodiment will be described in accordance with an electrostatographic recording medium. The invention, however, is not limited to apparatus for creating images on such a medium, as other media such as photographic film etc. may also be used.

Because electrostatographic reproduction apparatus are well known, the present description will be directed in particular to elements forming part of or cooperating more directly with the present invention. Apparatus not specifically shown or described herein are selectable from those known in the prior art.

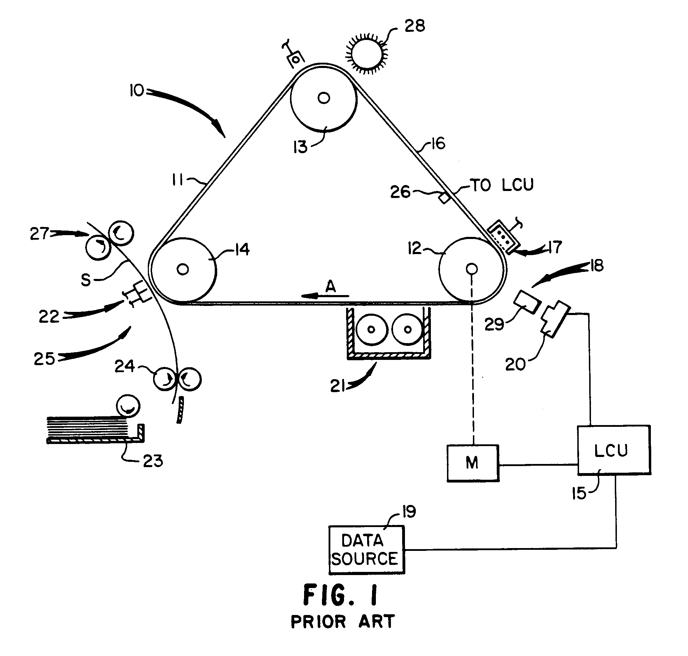

With reference now to Fig. 1, an electrostatographic reproduction apparatus 10 includes a recording medium such as a photoconductive web 11 or other photosensitive medium that is trained about three transport rollers 12, 13 and 14, thereby forming an endless or continuous web. Roller 12 is coupled to a driver motor M in a conventional manner. Motor M is connected to a source of potential when a switch (not shown) is closed by a signal from a logic and control unit (LCU) 15. When the switch is closed, the roller 12 is driven by the motor M and moves the web 11 in clockwise direction as indicated by arrow A. This movement causes successive image areas of web 11 to sequentially pass a series of electrophotographic work stations of the reproduction apparatus.

For the purposes of the instant disclosure, several work stations are shown along the web's path. These stations will be briefly described.

First, a charging station 17 is provided at which the photoconductive surface 16 of the web 11 is sensitized by applying to such surface a uniform electrostatic primary charge of a predetermined voltage. The output of the charger may be controlled by a grid connected to a programmable power supply (not shown). The supply is in turn controlled by the LCU 15 to adjust the voltage level Vo applied onto the surface 16 by the charger 17.

At an exposure station 18 an electrostatic image is formed by modulating the primary charge on an image area of the surface 16 with selective energization of point-like radiation sources in accordance with signals provided by an image data source 19 such as a document image scanner, computer work station, word processor, and the like which generally produce print jobs as character code signals, such as ASCII code. The print jobs are sometimes queued in a print server, and spooled one page at a time to a raster image processor (RIP). The point-like radiation sources are supported in a print head 20 to be described in more detail below.

A development station 21 includes developer which may consist of iron carrier particles and electroscopic toner particles with an electrostatic charge opposite to that of the latent electrostatic image. Developer is brushed over the photoconductive surface 16 of the web 11 and toner particles adhere to the latent electrostatic image to form a visible toner particle, transferable image. The development station may be of the magnetic brush type with one or two rollers. Alternatively, the toner particles may have a charge of the same polarity as that of the latent electrostatic image and develop the image in accordance with known reversal development techniques.

The apparatus 10 also includes a transfer station 25 shown with a corona charger 22 at which the toner image on web 11 is transferred to a copy sheet S; and a cleaning station 28, at which the photoconductive surface 16 of the web 11 is cleaned of any residual toner particles remaining after the toner images have been transferred. After the transfer of the unfixed toner images to a copy sheet S, such sheet is transported to a heated pressure roller fuser 27 where the image is fixed to the copy sheet S.

As shown in FIG. 1, a copy sheet S is fed from a supply 23 to driver rollers 24, which then urge the sheet to move forward onto the web 11 in alignment with a toner image at the transfer station 25.

To coordinate operation of the various work stations 17, 18, 21, and 25 with movement of the image areas on the web 11 past these stations, the web has a plurality of indicia such as perforations along one of its edges. These perforations generally are spaced equidistantly along the edge of the web 11. At a fixed location along the path of web movement, there is provided suitable means 26 for sensing web perforations. This sensing produces input signals into the workstation LCU 15 which has a digital computer, preferably a microprocessor. The microprocessor has a stored program responsive to the input signals for sequentially actuating, then de-actuating the work stations as well as for controlling the operation of many other machine functions. Additional or other encoding means may be provided as known in the art for providing the precise timing signals for control of the various functions of the apparatus 10.

Programming of a number of commercially available microprocessors is a conventional skill well understood in the art. This disclosure is written to enable a programmer having ordinary skill in the art to produce an appropriate control program for the one or more microprocessors used in this apparatus. The particular details of any such program would, of course, depend on the architecture of the designated microprocessor.

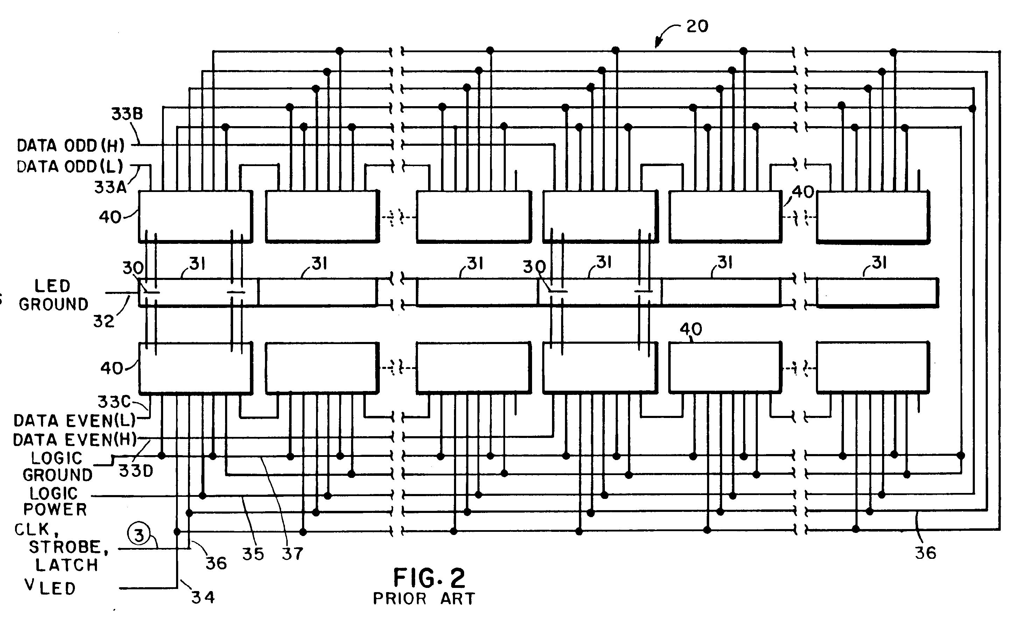

With reference to FIGS. 1 and 2, the print head 20, as noted, is provided with a multiplicity of energizable point-like radiation sources 30, preferably light-emitting diodes (LED's) although other recording devices such as thermal devices, liquid crystal display elements or needle electrodes are also contemplated. Optical means 29 may be provided for focusing light from each of the LED's onto the photoconductive surface. The optical means preferably comprises an array of optical fibers such as sold under the name SELFOC, a trademark for a gradient index lens array sold by Nippon Sheet Glass, Limited. Due to the focusing power of the optical means 29, a row of emitters will be imaged on a respective transverse line on the recording medium.

With reference to FIG. 2, the print head 20 comprises a suitable support with a series of LED chips 31 mounted thereon. Each of the chips 31 includes in this example 64 LED's arranged in a single row. Chips 31 are also arranged end-to-end in a row and where seventy-six LED chips are so arranged, the print head will extend across the width of the web 11 and include 4864 LED's arranged in a single row. To each side of this row of LED's there are provided seventy-six identical driver chips 40. Each of these driver chips include circuitry for addressing the logic associated with each of 32 LED's to control whether or not an LED should be energized or activated. Two driver chips 40 are thus associated with each chip of 64 LED's. Each of the two driver chips will be coupled for driving of alternate LED's. Thus, one driver chip will drive the odd numbered LED's of the 64 LED's and the other will drive the even numbered LED's of these 64 LED's. The driver chips 40 are electrically connected in parallel to a plurality of lines 34-37 providing various electrical control signals and potentials. Lines 34 and 35 provide electrical energy for operating the various logic devices and current drivers in accordance with their voltage requirements. Lines 32 and 37 provide ground or return lines for lines 34 and 35, respectively. A series of lines, 36a, b and c provide clock signals and other pulses for controlling the movement of data to the LED's in accordance with known techniques. Data lines 33A, 33B, 33C and 33D are also provided for providing digital data or image signals in the form of either a high or low logic level. The driver chips each include a data-in and data-out port so that data is serially passed between appropriate chips. Driver chips having respective shift registers linked together as such comprise a "shift register assemblage."

The driver chips receiving the data for the odd numbered LED's are divided into two shift register assemblage groups. The first group of shift register assemblages receive data serially through line 33A. The second group of driver chips receive data through line 33B. Similarly, the driver chips receiving the data for the even-numbered LED's are divided into two shift register assemblage groups and receive data over lines 33C, 33D, respectively.

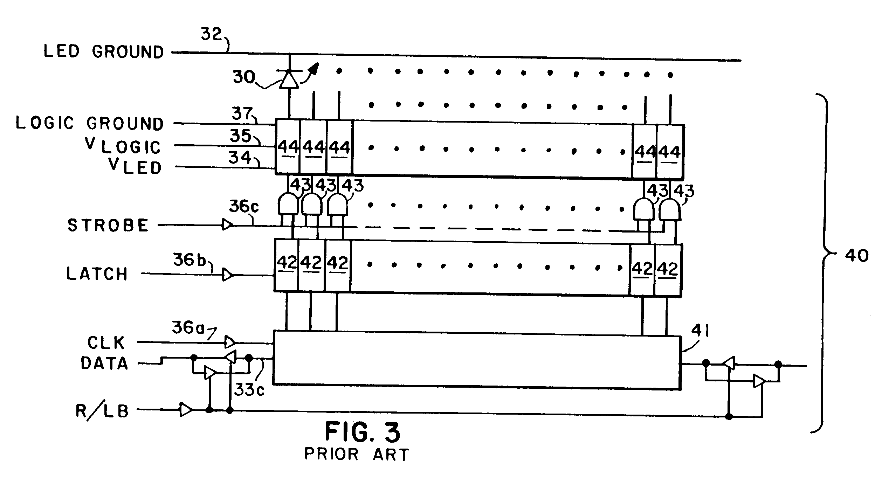

With reference now to FIG. 3, the architecture for each driver chip 40 includes a 32 bit bi-directional shift register 41. A logic signal carried over line R/LB determines the direction data will flow down this register. Assume that this chip is enabled to cause data to flow down the register from left to right as shown in FIG. 3. Data thus enters shift register 41 over line 33C through the driver chip's data-in port at the left from, for example, the data-out port of a driver chip immediately to the left or from the LCU if the driver chip 40 is the first chip for data to enter. Data exits from this chip at the data-out port to be input to the next adjacent driver chip to the right of driver chip 40. In operation, for each line of image to be exposed in the main scanning direction, i.e., transverse to that of movement of the recording medium 11, suitably rasterized data from the data source streams serially through each of the four shift register assemblages under control of clock pulses provided by the LCU over line 36a. When 4864 bits of data (1's or 0's) are stored by the shift registers of all of the driver chips, a latch signal is provided over line 36b to latch this data into latch registers 42 so that the shift registers 41 may commence filling with data signals for the next line of exposure. Thirty-two latch registers 42 are provided in each driver chip to receive the data transferred in parallel fashion from the shift register 41. Each latch register is associated with a particular LED and adjacent latch registers are associated with every other LED. A logic AND gate 43 is associated with each latch register and has one input coupled to the output of its respective latch register and its other input coupled to a line 36c for providing a strobe or timing pulse from the LCU. This strobe pulse determines when to trigger the LED's to turn on in relation to the position of the recording medium and the duration for which the LED's are turned on. All the AND gates have one of their inputs connected to this strobe line. The output of each of the AND gates is coupled to a logic circuit that is part of a constant current driver circuit 44. Leads to the constant current driver circuit include voltage supply and ground lines (35 and 37, respectively) to the logic devices therein as well as separate voltage and return lines (34 and 32, respectively) for providing current to the LED's. Alternatively, several strobe signals of varying durations may be used to control the "on" times of the LED's in accordance with time durations designed to provide uniform light output on the average for the subgroups of LED's on each chip.

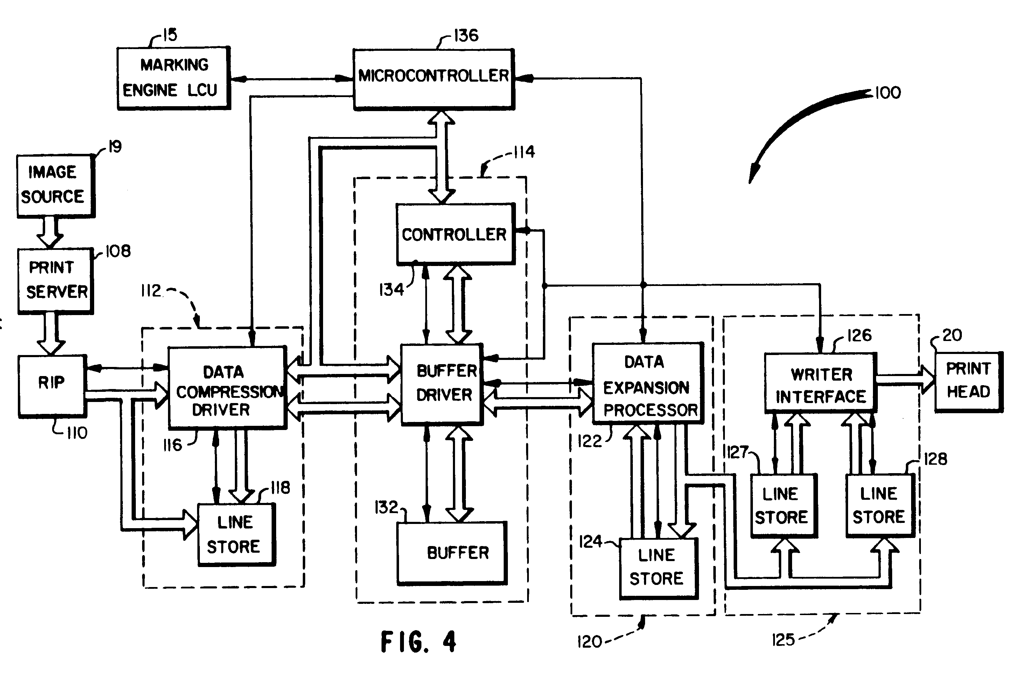

With reference now to FIG. 4, a printer control system or job image buffer (JIB) 100 is shown. The JIB 100 is operable in conjunction with or disposed within the LCU 15 of the reproduction apparatus 10 as described previously with respect to Fig. 1. The JIB 100 is therefore interconnected with the image source 19 and the print head 20. General motor control and control of other workstation functions as previously described with respect to the LCU 15 are thus unchanged. However, it is to be understood that the following is applicable generally to any electronic printing apparatus wherein an image to be printed is received from a data or image source as character code signals for rasterization in a raster image processor.

In FIG. 4, elements comprising the JIB 100 are interconnected by a series of data links shown as double-line arrows and control links shown as single-line arrows. Image data source 19 produces print jobs as character code signals to be queued in a print server 108, and spooled one page at a time to a raster image processor (RIP) 110. The RIP converts the character code signals to a rasterized video data stream for printing pixel by pixel as described hereinabove.

The JIB 100 receives the image data stream from the RIP 110. The JIB includes a data compressor 112, which is preferably a hardware implementation of an appropriate algorithm which encodes redundant information into a more compact form before passing the compressed data stream to a multi-page image buffer 114, also part of the JIB. A preferred compression algorithm is the CCITT Group IV facsimile algorithm, which is well known to those skilled in the art, but other forms of data compression are available, and reference is made to Data Compression by Gilbert Held, 1983, John Wiley and Sons, for examples of various compression techniques. Data compressor 112 includes a data stream compression driver 116 and a line store 118 for buffering a full line's worth of data.

An expander 120 is the companion to data compressor 112, and it includes a data expansion processor 122 and a line store 124. The expander retrieves the compressed data stream from multi-page image buffer 114 and reconstructs the output data into original form. The data stream is transmitted to a data resequencing circuit 125 as sixteen-bit data words on a parallel data link. The resequencing circuit 125 is comprised of two resequencing line store devices 127 and 128 constructed according to the present invention and a writer interface 126, and is also part of the JIB.

Multi-page image buffer 114 is provided for storing image data to permit the electronic recirculation of images for collation; thereby eliminating the need for a mechanical recirculating document handler. The heart of the JIB is a large bank of dynamic random access memory (DRAM) in a buffer 132 for storage of the image data as it is processed by data compressor 112.

Controller 134 acts as a direct memory access controller, allowing data compressor 112 and expander 120 direct access to DRAM buffer 132 without a microprocessor, and as a DRAM controller arbitrating between memory read, write, and refresh cycles.

A microcontroller 136 functions as the system manager, overseeing the overall operation of the JIB. The microcontroller will handle communication with the logic and control unit (LCU) 15 of the marking engine, store the internal pointers identifying the beginning and ending addresses for each image, initiate transfers from the RIP 110, and control the data compression and expansion process.

The writer interface 126 receives a full line of image data from the expander 120 after the line is processed by one of the pair of resequencing line stores 127 and 128. The resequencing line stores 127 and 128 are duplicate devices, each of which are constructed according to the present invention as a novel resequencing line store device operable for the resequencing of data. The paired resequencing line stores 127 and 128 are operated to resequence the data stream before sending it to the driver chips 40 on the print head 20.

Description for operation of one of the two duplicate resequencing line stores 127 and 128 and a method of resequencing one line of data will now be made. It should be understood that the second of the two duplicate devices is also provided for operating upon a second line of data. Thus, in any two lines of data wherein the first line is presented by the expander 120 before the second line, the second line of data is being resequenced by one of the two resequencing line store devices 127 and 128 while the first line of data, already resequenced, is being sent to the shift register assemblages on print head 20 by the other resequencing line store.
Accordingly, when a third line of data is then presented to the latter line store, the former line store is then delivering the resequenced second line to the shift register assemblages on the print head 20. By alternating the resequencing of the bits, data is thereby transferred to the print head at the same high data rate that is output from the RIP, even though the data is being continuously operated upon by the resequencing circuit 125.

As was described hereinabove, in the preferred embodiment of the present invention, there are 4864 bits of data or image signals to be resequenced for each line of rasterized image data. Data is generated by the data source 19 and provided as a bit stream of rasterized data by RIP 110. The RIP delivers the data bits for each line of print in sequential order such that the first bit represents the first numbered pixel at the beginning of a line in the main scanning direction and the last bit represents data for the 4864th numbered pixel at the end of the line. The data stream is transmitted from the expander 120 to a data resequencing circuit 125 as sixteen-bit data words on a parallel data link. However, the 4864 bits of image data per data line must exit the JIB 100 in groups of odd/low, odd/high, even/low, even/high ordered bits to the corresponding four data input channels 33A, 33B, 33C, and 33D of the shift register assemblages on the print head 20. This requirement is due to the aforementioned use of odd and even driver chips and of grouping both the odd and even driver chips further into low and high numbered LED driver chips. By dividing the distribution of the bits into four channels to the proper shift registers on the print head, data is thereby transferred to the print head 20 at the same high data rate that is output from the RIP, even though the shift registers on the print head have a shifting speed of only one fourth of the data clock speed of the RIP 110.

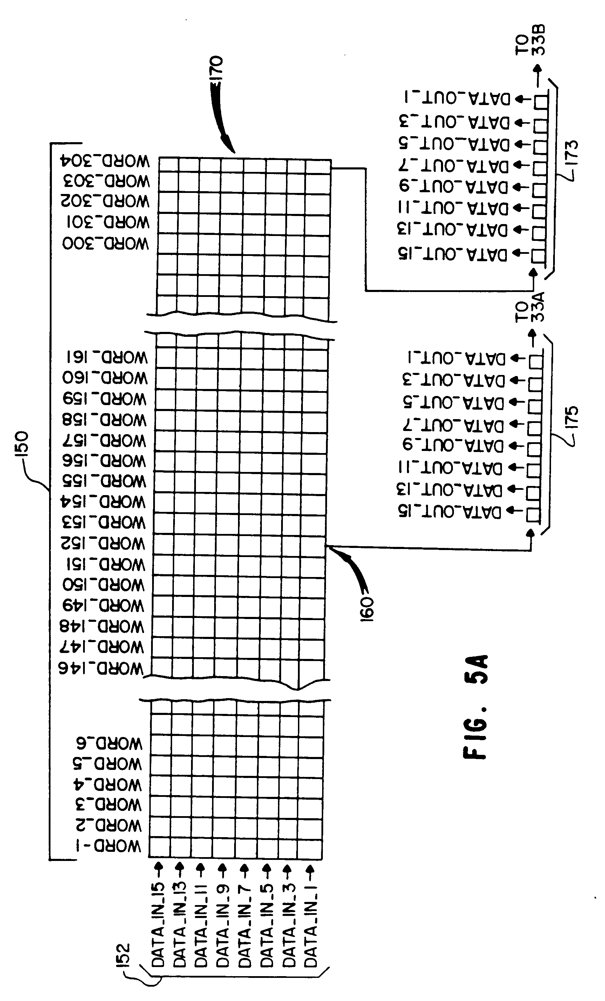

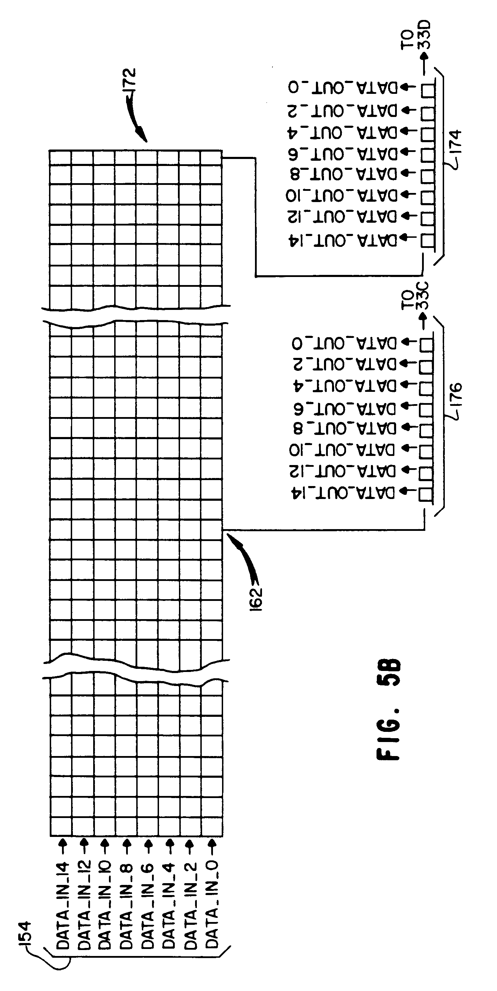

As illustrated in FIGS. 5A and 5B, each resequencing line store 127 and 128 comprises a sixteen-bit-wide, 304-word deep shift register 150. The sixteen-bit parallel data link is composed of sixteen channels of which the odd and even channels (labelled Data In 1,3,5... 15 and Data In 0,2,4...14, respectively) are respectively attached to the odd and even memory cell row groups 152 and 154 of the shift register. Accordingly, the eight odd and eight even bits of each inputted sixteen-bit data word are shifted horizontally into the shift register 150 along the respective odd and even memory cell rows 152 and 154. Included in the shift register 150 are four eight-bit columnar subgroups of memory cells so as to comprise four vertical serial shift registers 160, 162, 170, and 172. Two of the vertical serial shift registers 160 and 162 are placed at the midpoint, or 152nd memory cell column, and the remaining vertical serial shift registers 170 and 172 comprise the endpoint, or 304th, memory cell column. Each of the vertical serial shift registers 160, 162, 170, and 172 thus operate on the 8-bit segments of the data present therein to serially shift data from the midpoint and end point columns respectively to the print head 20 over serial data channels 33A, 33B, 33C, and 33D. FIGS. 5A and 5B show eight-bit data words 173, 174, 175 and 176 being shifted from the odd and even endpoint and midpoint serial shift registers 170, 172, 160, and 162, respectively. Whereas the illustration for data words 173,174,175, and 176 indicates all are logic high level bits, this is merely for illustrative purposes only, as data of course may be strings of logic high and low signals. Each of the serially-shifted 8-bit data words contains the data residing in the respective odd or even row portions of the midpoint or endpoint columns. Hence, although all four 8-bit words are shifted out of the vertical shift registers simultaneously, as will be described hereinbelow, the particular composition of the eight data bits in each word is determined by the data shifted into the shift register 150 along the odd and even memory cell rows 152 and 154. Each of the resequencing line store devices 127 and 128 thereby resequences the 4864 bits of rasterized image data so as to exit the JIB 100 in an odd/low, odd/high, even/low, even/high order on the corresponding four data input channels 33A, 33B, 33C, and 33D. The resequenced data is then in suitable order for acceptance by the shift register assemblages on the print head 20.

Two clock lines are included in each of the illustrated control links from the writer interface 126 to each resequencing line store 127 and 128. The clock lines carry clock signals which control the movement of data to and from the resequencing line stores 127, 128. A load clock signal activates the loading of the sixteen bit data word present on the parallel input link into the first column (labelled WORD 1) of the shift register 150 and an unload clock signal causes the data present in the vertical serial shift registers 160, 170, 162, and 172 to be simultaneously unloaded onto the respective serial data channels 33A, 33B, 33C, 33D. The load clock signal also causes each data bit in each memory cell of any one column to be advanced in parallel fashion to a corresponding cell of the same row but in the next higher-numbered column. Hence, all 304 columns of the shift register 150 are filled with data before the verical serial shift registers 160, 162, 170, 172 are activated. The resequencing line store 127 or 128 thereby is operable to resequence a full line of data (4864 bits).

Timing control functions for the load and unload clock, and other control of each resequencing line store 127 and 128, are provided by logic circuitry in the writer interface 126. As was previously described, in any two successive lines of data presented by the expander 120 to the resequencing circuit 125, the second line of data is resequenced by one of the two resequencing line store devices 127 and 128 while the first line of data, already resequenced, is sent to the print head 20 by the other resequencing line store. The writer interface 126 provides the load and unload clock signals to the corresponding resequencing line store in a timely fashion for such an alternating transfer of data lines.

With respect to the timing of the first and last lines of any one image frame of data, there is initially a set of commands provided by the microcontroller 136 to the writer interface 126 which loads registers in the writer interface 126 with location information on the starting and ending positions of each frame of the image data supplied by the expander 120. Because the JIB operates as a multi-page buffer store of sequential image frames, the frame location information is provided by the microcontroller 136 in conjunction with the operation of the memory controller 134. Such frame information is supplied by the microcontroller 134 to control the release of image frames, in a non-sequential order if such is desired, to the expander 120 and resequencing circuit 125 for printing by the print head 20. The resequencing of image data is therefore synchronized by the load and unload clock signals according to the rotation of the web 11. The writer interface 126 then may control the transfer and printing of the data on a frame-by-frame basis.

The expander 120, resequencing line store 127 and 128, and writer interface 126 may be constructed using transistor-transistor logic (TTL) or application-specific integrated circuit (ASIC) technology. The design of the resequencing line store ASIC and related writer interface logic circuitry may be realized by one of ordinary skill in the art after reading the specification herein.

Thus, a stream of data bits, representing in sequential order a data bit stream of 4864 pixels, is reformatted by relatively inexpensive circuitry and output to the print head in four serial data streams of eight data bit words.

As described hereinabove, the preferred embodiment operates upon 4864 bits of data or image signals for each line of rasterized image data. However, the resequencing line store according to the present invention may be configured to operate upon parallel data of greater or lesser line length, to be supplied to a print head design of correspondingly greater or lesser line length, by modifying the total number of rows and columns of memory cells therein. Thus, data generated by a data source 19 and provided as a bit stream of rasterized data by a RIP 54 in sequential order may be read out in an odd/even, high/low order to the corresponding four data input channels of the shift register assemblages on the print head. To supply resequenced data to a (M x N) length print head, having input channels totalling an even integer C and requiring odd and even resequencing of data, each resequencing line store 127 and 128 would then comprise a M-bit-wide, N-word deep shift register, whereby data would be supplied over a M-bit parallel data link. The resequencing line store would incorporate (M/2)-bit vertical serial shift registers, two of each being operable respectively at the odd and even grouped memory cells of every (2IN/C)nd memory cell column, where I = 1, 2, 3,...C/2. Thus, there would be a total of C vertical serial shift registers incorporated in the M-bit-wide, N-word deep shift register. The basic resequencing line store concept described herein could be used to design resequencing circuits to reorganize serial data for a variety of multi-channel print heads with differing numbers, lengths and arrangements of shift register assemblages.

The invention has been described in detail with particular reference to preferred embodiments thereof, but it will be understood that variations and modifications can be effected within the scope of the invention as claimed.

## Claims

1. A data resequencing apparatus (125) for use in a printing device comprising a printhead (20) having a plural number M x N of linearly arranged recording elements (30) ordered in predetermined odd and even groups and subgroups thereof, wherein M and N are each numbers greater than one, said resequencing apparatus resequencing at least one line of data bits having a first sequential order into a distribution mode according to said ordering of recording elements, characterized by:
at least one resequencing line store device (127, 128) having a plurality of interconnected memory cells (150) operable for storage and selectable shifting of said data bits, each of said cells being adapted for storage of one of said bits, said plurality of cells being arranged in a plurality of cell groups (152, 154) and a plurality of cell subgroups (160, 170, 162, 172) corresponding respectively to said ordering of recording elements and wherein each cell group comprises a plurality of memory cells interconnected to form a matrix of M x N x (1/2) memory cells (150) operable for storage and selectable shifting of said data bits in response to control signals, said matrix of cells (150) being arranged so as to form M/2 rows of parallel shift registers of N column stages each;
control means (136) for providing control signals to implement parallel selectable shifting of a column of M/2 bit words of data along the rows of said parallel shift registers of each cell group to fill said matrix of memory cells (150) with M x Nx(1/2) bits of data, said control means (136) providing additional control signals for serially shifting data bits from the Nth column stage (170, 172) of said matrix (150) and from an intermediate column stage (160, 162) corresponding to said ordering of recording elements (30) on said printhead (20) to thereby resequence said data onto at least four respective data lines that correspond to said subgroups and which transmit data to said printhead.

2. The apparatus of claim 1 further comprising
driver means (44) for activating said recording elements (30) to be operable for recording an image on a recording material; and
shift register assemblage means (40) having plural shift register assemblages (41) for storing said resequenced data serially inputted into each shift register assemblage (41) and for outputting said stored data in parallel to said driver means (44);
wherein said resequenced data is partitioned into multiple data streams of odd- and even-numbered, high- and low-numbered bit sequences for input to corresponding ones of said shift register assemblages (41).

3. The apparatus of claim 2 wherein said data resequencing apparatus (125) further comprises first and second resequencing line store devices (127, 128) respectively operable upon first and second lines of data bits, and wherein said control signals alternately enable said first and second resequencing line store devices (127, 128), wherein said second line of data bits is resequenced by said second resequencing line store device (128) while said first line of data bits, already resequenced is shifted to said shift register assemblages (41) from said first resequencing line store device (127) and wherein said second resequenced line of data bits is subsequently shifted from said second resequencing line store device (128) to said shift register assemblages (41).

4. Apparatus according to any one of the preceding claims, further comprising:
data compressor means (112) including image buffer means (114) operable for compressing and storing compressed data;
expander means (120) operable for retrieving said compressed data from said image buffer means (114) and for reconstructing said compressed data into said line of data bits in a multibit parallel word format and transferring same to said matrix of memory cells (150) and
controller means (136) operable for controlling said data compression means, buffer means and expander means.

## Patentansprüche

1. Einrichtung zur Umstellung einer Datensequenz (125) zur Verwendung in einer Druckvorrichtung mit einem Druckkopf (20), der eine Vielzahl von M x N zeilenförmig angeordneter Aufzeichnungselemente (30) aufweist, die in vorgegebene ungerad- und geradzahlige Gruppen und Untergruppen eingeteilt sind, wobei M und N jeweils größer Eins sind, und wobei die Umstellungseinrichtung (125) mindestens eine Datenbitzeile von einer ersten Datensequenz in eine Datensequenz umstellt, die der Einteilung der Aufzeichnungselemente (30) entspricht, gekennzeichnet durch
- mindestens einen Zeilenspeicher (127, 128) zur Datensequenz-Umstellung mit einer Vielzahl von untereinander verbundenen Speicherzellen (150), die für die Speicherung und ein wahlweises Verschieben der Datenbits einsetzbar sind, wobei jede der Zellen eines der Bits speichern kann und die Vielzahl der Zellen in mehreren Gruppen (152, 154) und Untergruppen (160, 170, 162, 172) angeordnet sind, die jeweils der Einteilung der Aufzeichnungselemente entsprechen, und wobei jede Zellengruppe eine Vielzahl von Speicherzellen aufweist, die untereinander verbunden sind und eine Matrix von M x N x (1/2) Speicherzellen (150) zum Speichern und Verschieben der Datenbits in Abhängigkeit von Steuersignalen bilden, wobei die Zeilen und Spalten der Zellenmatrix (150) so angeordnet sind, daß sie M/2 Reihen paralleler N-stufiger Schieberegister bilden;
- Steuermittel (136), die Steuersignale erzeugen, um eine wählbare Parallelverschiebung einer Spalte aus M/2 Datenbitwörtern entlang der Reihen der parallel angeordneten Schieberegister jeder Zellengruppe durchzuführen und die Matrix der Speicherzellen (150) mit M x N x (1/2) Datenbits zu füllen, wobei die Steuermittel (136) zusätzliche Steuersignale für die serielle Verschiebung der Datenbits der N-ten Spalten-Stufe (170, 172) der Matrix (150) und einer SpaltenZwischenstufe (160, 162), die der Einteilung der Aufzeichnungselemente (30) des Druckkopfes (20) entsprechen, um die hierdurch umgestellte Datensequenz auf zumindest vier, den Untergruppen entsprechenden und die Daten dem Druckkopf zuführenden Datenleitungen (33A, 33B, 33C, 33D) zu verteilen.

2. Einrichtung nach Anspruch 1, gekennzeichnet durch
- Treibermittel (44) zum Aktivieren der Aufzeichnungselemente (30) zur Aufzeichnung eines Bildes auf einem Aufzeichnungsmaterial; und
- Schieberegister-Anordnungen (40) mit mehreren Schieberegistergruppen (41) zum Speichern der seriell in jede Schieberegistergruppe (41) eingegebenen umgestellten Datensequenzen und zur parallelen Ausgabe der gespeicherten Daten zu den Treibermitteln (44);
- wobei die umgestellte Datensequenz in mehrere Datenströme aus ungerad- und geradzahligen, hoch- und niedrigzahligen Bitfolgen zum Eingeben in die entsprechenden Schieberegistergruppen (41) eingeteilt werden.

3. Einrichtung nach Anspruch 2, dadurch gekennzeichnet, daß sie zusätzlich erste und zweite Zeilenspeicher (127, 128) zur Umstellung der Datensequenz aufweist, die erste bzw. zweite Datenbitzeilen verarbeiten, und daß die Steuersignale die ersten und zweiten Zeilenspeicher (127, 128) abwechselnd freigeben, wobei die zweite Datenbitzeile durch den zweiten Zeilenspeicher (128) umgestellt wird, während die erste, bereits umgestellte Datenbitzeile vom ersten Zeilenspeicher (127) in die Schieberegistergruppen (41) eingelesen wird und die zweite umgestellte Datenbitzeile anschließend vom zweiten Zeilenspeicher (128) in die Schieberegistergruppen (41) eingelesen wird.

4. Einrichtung nach einem der vorhergehenden Ansprüche, gekennzeichnet durch
- Datenkompressionsmittel (112) mit Bildspeichermitteln (114) zum Komprimieren und Speichern der komprimierten Daten;
- Expandiermittel (120) zum Abrufen der komprimierten Daten aus dem Bildspeicher (114) und zum Rekonstruieren der komprimierten Daten in die ursprüngliche Datenbitzeile in einem parallelen Multibit-Wortformat und Weiterleiten der Daten zur Speicherzellenmatrix (150); und
- Steuermittel (136) zum Steuern der Datenkompressionsmittel, des Bildspeichers und der Expandiermittel.

## Revendications

1. Dispositif de remise en séquence de données (125) destiné à être utilisé dans un dispositif d'impression comprenant une tête d'impression (20) comportant une pluralité M x N d'éléments d'enregistrement agencés linéairement (30), ordonnés par groupes prédéterminés pairs et impairs et en sous-groupes de ceux-ci, dans lequel M et N sont chacun des nombres supérieurs à un, ledit dispositif de remise en séquence remettant en séquence au moins une ligne de bits de données présentant un premier ordre séquentiel dans un mode de répartition conformément à ladite mise en ordre des éléments d'enregistrement, caractérisé par :
au moins un dispositif de mémorisation de ligne de remise en séquence (127, 128) comportant une pluralité de cellules mémoire interconnectées (150) pouvant être mises en oeuvre pour la mémorisation et le décalage sélectif desdits bits de données, chacune desdites cellules étant adaptée à la mémorisation de l'un desdits bits, ladite pluralité de cellules étant agencée en une pluralité de groupes de cellules (152, 154) et une pluralité de sous-groupes de cellules (160, 170, 162, 172) correspondant respectivement à ladite mise en ordre des éléments d'enregistrement et dans lequel chaque groupe de cellules comprend une pluralité de cellules mémoire interconnectées afin de former une matrice de M x N x (1/2) cellules mémoire (150) pouvant être mises en oeuvre pour la mémorisation et le décalage sélectif desdits bits de données en réponse à des signaux de commande, ladite matrice de cellules (150) étant agencée de façon à former M/2 rangées de registres à décalage parallèles de N étages de colonnes chacun,
un moyen de commande (136) destiné à procurer des signaux de commande afin de réaliser un décalage sélectif parallèle d'une colonne de M/2 mots de bits de données suivant les rangées desdits registres à décalage parallèles de chaque groupe de cellules afin de remplir ladite matrice de cellules mémoire (150) avec M x N (1/2) bits de données, ledit moyen de commande (136) procurant des signaux de commande supplémentaires pour décaler en série des bits de données à partir de l'étage de la N^{ème} colonne (170, 172) de ladite matrice (150) et à partir d'un étage de colonne intermédiaire (160, 162) correspondant à ladite mise en ordre des éléments d'enregistrement (30) sur ladite tête d'enregistrement (20) afin de remettre ainsi en séquence lesdites données sur au moins quatre lignes de données respectives qui correspondent auxdits sous-groupes et qui transmettent les données à ladite tête d'impression.

2. Dispositif selon la revendication 1 comprenant en outre un moyen de circuit d'attaque (44) destiné à activer lesdits éléments d'enregistrement (30) pour qu'ils puissent être mis en oeuvre pour l'enregistrement d'une image sur un matériau d'enregistrement, et
un moyen d'assemblages de registres à décalage (40) comportant plusieurs assemblages de registres à décalage (41) destinés à mémoriser lesdites données remises en séquence entrées en série dans chaque assemblage de registre à décalage (41) et à sortir lesdites données mémorisées en parallèle vers ledit moyen de circuit d'attaque (44),
dans lequel lesdites données remises en séquence sont partagées en multiples flux de données de séquences de bits à numérotages élevé et bas et à numérotages pair et impair afin de les entrer dans les assemblages correspondants parmi lesdits assemblages de registres à décalage (41).

3. Dispositif selon la revendication 2 dans lequel ledit dispositif de remise en séquence de données (125) comprend en outre des premier et second dispositifs de mémorisation de ligne de remise en séquence (127, 128) pouvant être mis en oeuvre respectivement sur les première et seconde lignes de bits de données et dans lequel lesdits signaux de commande valident en alternance lesdits premier et second dispositifs de mémorisation de ligne de remise en séquence (127, 128), dans lequel ladite seconde ligne de bits de données est remise en séquence par ledit second dispositif de mémorisation de ligne de remise en séquence (128) alors que ladite première ligne de bits de données, déjà remise en séquence, est décalée vers lesdits assemblages de registres à décalage (41) à partir dudit premier dispositif de mémorisation de ligne de remise en séquence (127) et dans lequel ladite seconde ligne de remise en séquence de bits de données est ultérieurement décalée à partir dudit second dispositif de mémorisation de ligne de remise en séquence (128) vers lesdits assemblages de registres à décalage (41).

4. Dispositif selon l'une quelconque des revendications précédentes, comprenant en outre :
un moyen de compression de données (112) comprenant un moyen de mémoire tampon d'image (114) pouvant être mis en oeuvre pour compresser et mémoriser des données compressées,
un moyen d'expansion (120) pouvant être mis en oeuvre pour récupérer lesdites données compressées à partir dudit moyen de mémoire tampon d'image (114) et afin de reconstituer lesdites données compressées en ladite ligne de bits de données sous un format de mot parallèle multibits et transférer celui-ci vers ladite matrice de cellules mémoire (150), et
un moyen de contrôleur (136) pouvant être mis en oeuvre pour commander lesdits moyen de compression de données, moyen de mémoire tampon et moyen d'expansion.
